(19) **Europäisches Patentamt**
**European Patent Office**
**Office européen des brevets**

(11) **EP 3 988 968 B1**

(12) **EUROPEAN PATENT SPECIFICATION**

(45) Date of publication and mention
of the grant of the patent:
**15.07.2026 Bulletin 2026/29**

(21) Application number: **21798542.3**

(22) Date of filing: **24.06.2021**

(51) International Patent Classification (IPC):
**G01S 19/42** (2010.01)    **G01C 21/26** (2006.01)
**G01C 21/00** (2006.01)    **G01C 21/30** (2006.01)

(52) Cooperative Patent Classification (CPC):
**G01C 21/3819; G01C 21/30; G01C 21/3889**

(86) International application number:
**PCT/CN2021/102161**

(87) International publication number:
**WO 2022/052567 (17.03.2022 Gazette 2022/11)**

(54) **VEHICLE POSITIONING METHOD AND APPARATUS, VEHICLE, AND STORAGE MEDIUM**

VERFAHREN UND VORRICHTUNG ZUR POSITIONIERUNG EINES FAHRZEUGS, FAHRZEUG UND SPEICHERMEDIUM

PROCÉDÉ ET APPAREIL DE POSITIONNEMENT DE VÉHICULE, VÉHICULE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2020 CN 202010936807**

(43) Date of publication of application:
**27.04.2022 Bulletin 2022/17**

(73) Proprietor: **Guangzhou Xiaopeng Autopilot Technology Co., Ltd.**
**Guangzhou, Guangdong 510640 (CN)**

(72) Inventors:
- **LIU, Zhongyuan**
  **Guangdong 510640 (CN)**
- **LI, Hongjun**
  **Guangdong 510640 (CN)**
- **CHAI, Wennan**
  **Guangdong 510640 (CN)**
- **HUANG, Ya**
  **Guangdong 510640 (CN)**
- **JIANG, Shaofeng**
  **Guangdong 510640 (CN)**
- **XIAO, Zhiguang**
  **Guangdong 510640 (CN)**
- **OUYANG, Zhan**
  **Guangdong 510700 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(56) References cited:
WO-A1-2005/119177    CN-A- 111 220 164
CN-A- 111 381 269    CN-A- 111 507 130
CN-A- 111 524 185    CN-A- 112 068 171
US-A1- 2010 169 013

## Description

### Cross Reference to Related Applications

The present application claims priority to the prior application No. 202010936807.1, filed on September 8, 2020, and entitled "METHOD AND APPARATUS FOR VEHICLE POSITIONING, VEHICLE, AND STORAGE MEDIUM'.

### Field of Invention

The present invention relates to the field of positioning technologies, and in particular, to a method and apparatus for vehicle positioning, a vehicle, and a storage medium.

### Background

In the process of vehicle driving, it is often necessary to position a vehicle, and especially for an autonomous or unmanned vehicle, accuracy of vehicle positioning affects safety of vehicle driving.

In the prior art, a satellite map may be used for positioning. However, positioning through a map is easily affected by accuracy of the map, and positioning accuracy cannot be ensured. Moreover, when vehicles are on different types of roads, such as curves, trajectories of the vehicles in maps become irregular and complicated, and it is difficult to implement accurate positioning on different types of roads, which reduces accuracy of dead reckoning and safety of vehicle driving. US2010/169013 relates to Setting a planimetric feature having a high frequency of appearance as a planimetric feature to be recognized necessary for an own-vehicle position correction by referring to arrangement patterns of planimetric features having a high frequency of appearance for each of a plurality of types of road in response to a target object for an assist control, for example, a characteristic planimetric feature in an area where the own-vehicle will travel hereafter from among planimetric features on a road of which information is stored in a map database. Then, recognizing the set planimetric feature, and correcting an own-vehicle position from one based on a GPS and a travel path in accordance with a recognition result thereof.

### Summary of Invention

In view of the above-mentioned problems, a method and apparatus for vehicle positioning, a vehicle, and a storage medium are proposed to solve the above-mentioned problems or solve at least some of the above-mentioned problems.

A method for vehicle positioning is provided as set out in claim 1.

Optionally, said determining target map road information matching the real-time road information from the plurality of pieces of map road information includes:

determining a first map target point from a map lane line corresponding to the map road information, and determining a map relative position of another position on the map lane line to the first map target point, wherein the first map target point may be any point of the lane line in the map data;
determining a first real-time target point from the real-time lane line corresponding to the real-time road information, and determining a real-time relative position of another position on the real-time lane line to the first real-time target point, wherein the first real-time target point may be any point in the lane line corresponding to the real-time lane line; and
determining the target map road information matching the real-time road information based on the map relative position and the real-time relative position.

Optionally, said performing positioning correction on the vehicle based on the real-time road information and the target map road information includes:

determining a second real-time target point from the real-time road information, and determining a second map target point matching the second real-time target point from the target map road information; and
performing positioning correction on the vehicle based on the second real-time target point and the second map target point.

Optionally, before the acquiring real-time road information when it is detected that a vehicle is on a road of a target road type, the method further includes: determining, from the map data, the road type of the road where the vehicle is located.

Optionally, the target road type is a curve type.

An apparatus for vehicle positioning is provided, as set out in claim 6.

A computer-readable storage medium is provided, as set out in claim 11.

### Brief Description of Drawings

To explain the technical solutions of the present invention more clearly, the following will briefly describe the accompanying drawings required in the description of the present invention. Obviously, the accompanying drawings in the following description show only some embodiments of the present invention, and those of ordinary skill in the art can still derive other accompanying drawings from these accompanying drawings without creative efforts.

Fig. 1 is a flowchart of steps of a method for vehicle positioning according to an embodiment of the present invention;

Fig. 2a is a flowchart of steps of another method for vehicle positioning according to an embodiment of the present invention;

Fig. 2b is a schematic diagram of an example of lane line determining according to an embodiment of the present invention;

Fig. 3a is a flowchart of steps of still another method for vehicle positioning according to an embodiment of the present invention;

Fig. 3b is a schematic diagram of an example of a lane line in a map according to an embodiment of the present invention;

Fig. 3c is a schematic diagram of an example of a lane line sensed in real time according to an embodiment of the present invention;

Fig. 4 is a flowchart of an example of lane line matching according to an embodiment of the present invention; and

Fig. 5 is a schematic structural diagram of an apparatus for vehicle positioning according to an embodiment of the present invention.

**Detailed Description**

To make the above objects, features and advantages of the present invention more obvious and easier to understand, the present invention will be further explained in detail below with reference to the accompanying drawings and specific implementations. Clearly, the described embodiments are some rather than all of the embodiments of the present invention. All other embodiments obtained by a person of ordinary skill in the art based on the embodiments of the present invention without creative efforts shall fall within the protection scope of the present invention, as defined by the appended claims.

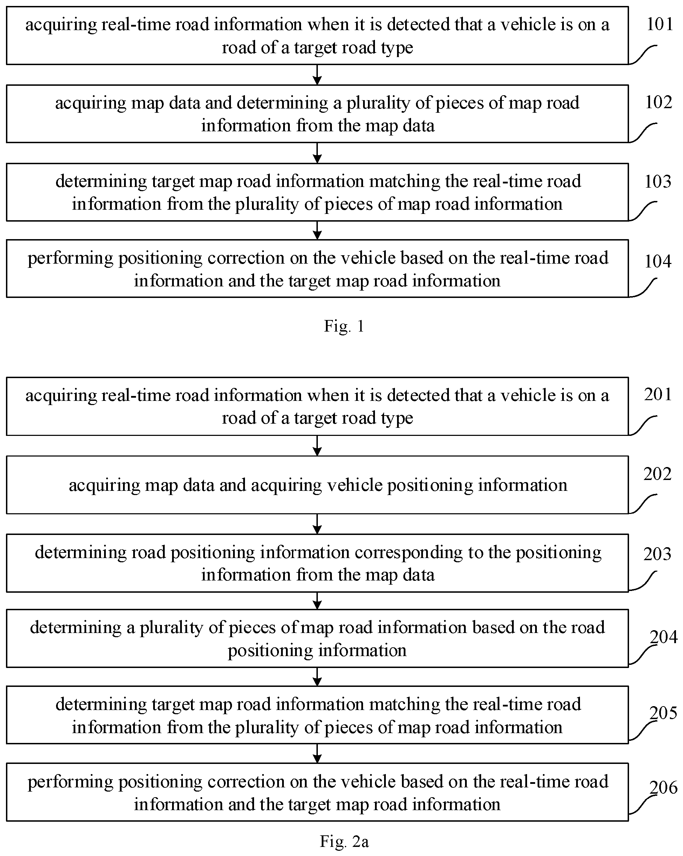

Referring to Fig. 1, a flowchart of steps of a method for vehicle positioning according to an embodiment of the present invention is illustrated. The method may specifically include the following steps:

step 101: acquiring real-time road information when it is detected that a vehicle is on a road of a target road type;

where road types may include a straight road type, a curve type and a branch road type; the target road type may be the curve type; the real-time road information may include but is not limited to lane line information, shoulder line information and wall edge line information; the shoulder line information may be information on an edge line of a shoulder in a road; and the wall edge line information may be information on an edge line of a wall when a vehicle is in a parking lot.

In the actual driving process, a road type of a road where a vehicle is currently located can be detected. When it is detected that the vehicle is on a curve type road, real-time road information on the road where the vehicle is currently located can be obtained through a sensing system in the vehicle.

When it is detected that the vehicle is on a non-curve type road, for example, when the vehicle is on a straight road type road, positioning can be performed through a navigation and positioning system in the vehicle.

In an embodiment of the present invention, before step 101, the method may further include the following steps:

determining, from the map data, the road type of the road where the vehicle is located;
where the map data may be semantic map data, and the semantic map data may include semantic information; the semantic information may include but is not limited to road information and parking space information, and the road information may include but is not limited to lane line information and wall edge line information of roads.

In the actual driving process, map data may be downloaded from the cloud in real time, or map data may be obtained from a preset map database in a vehicle in real time, and then map data of a road where the vehicle is currently located may be determined from the map data.

After the map data for the current road is determined, lane line information of the current road can be obtained, and then a linear correlation coefficient of the current road can be calculated based on the lane line information, so as to determine whether the current road is a curve type road.

The linear correlation coefficient may be used to indicate the degree to which the current road is a straight line, and the linear correlation coefficient may be a Pearson correlation coefficient.

In practice, position information of at least two points in lane line information of a current road, such as position information of endpoints, may be obtained, and then a linear correlation coefficient between points may be calculated based on the position information of the at least two points. A threshold of the linear correlation coefficient may be set to 0.9. When the linear correlation coefficient is 0.7, which is less than the threshold of the linear correlation coefficient, it can be determined that the current road is a curve type road, and when the linear correlation coefficient is 0.99, which is greater than the threshold of the linear correlation coefficient, it can be determined that the current road is a straight road type road.

In an embodiment of the present invention, after map data for a current road is determined, lane line information of the road where a vehicle is currently located may be acquired through a sensing module in the vehicle. For example, a camera in the vehicle may be used to obtain an image of the road where the vehicle is currently located, and then the image may be processed to obtain the lane line information of the road where the vehicle is currently located, or a coordinate system for the road where the vehicle is currently located may be established based on the vehicle, and then coordinates of the lane line information in the coordinate system may be determined based on the image, so as to determine the lane line information of the road where the vehicle is currently located in the coordinate system.

When there is no lane line on the road where the vehicle is currently located, such as a road in an underground parking lot or a rural road, the sensing module in the vehicle may be used to obtain wall edge line information or shoulder information of the road where the vehicle is currently located, and the wall edge line information or the shoulder information is used as the lane line information of the road where the vehicle is currently located.

After the lane line information of the current road is obtained, a linear correlation coefficient of the current road can be calculated based on the lane line information, so as to determine whether the current road is a curve type road.

In an example, the sensing system may also use, but is not limited to, ultrasonic waves and/or infrared rays for sensing.

Step 102: acquiring map data and determining a plurality of pieces of map road information from the map data;

where the map road information may be road information in the map data.

When the road type of the road where the vehicle is located is determined, the map data for the current road may be downloaded from the cloud, or the map data for the current road may be acquired from the preset map database in the vehicle, and then the road information of the current road may be determined from the map data based on positioning accuracy information in the map data.

For example, it may be determined that the positioning accuracy information of the map data is 200 cm while the length of the lane line corresponding to the lane line information of the real-time road information may be 500 cm, and then the lane line information of the current road within the accuracy range may be determined from the map data based on the positioning accuracy information; that is, the lane line of 700 cm may be determined from the map data.

After the road information of the current road is determined, the road information may be divided, and then a plurality of pieces of map road information may be determined.

For example, lane line information of a current road may be determined, and then a lane line corresponding to the lane line information may be divided to determine information on a plurality of lane lines.

Step 103: determining target map road information matching the real-time road information from the plurality of pieces of map road information;

where after the plurality of pieces of map road information are determined, the plurality of pieces of map road information may be used to match against the real-time road information, and then map road information that matches the real-time road information among the plurality of pieces of map road information, i.e., the target map road information, may be determined.

For example, a plurality of pieces of map road information may include map road information A, map road information B and map road information C. The map road information A, the map road information B and the map road information C may be used to match against real-time road information, and it may be determined that the map road information B is the map road information that matches the real-time road information.

Step 104: performing positioning correction on the vehicle based on the real-time road information and the target map road information.

The vehicle positioning may be to determine the current vehicle positioning in the map data through the navigation and positioning system in the vehicle.

After the target map road information is determined, vehicle positioning correction information may be determined based on the real-time road information and the target map road information, and then the vehicle positioning may be corrected based on the correction information in the map data, for example, the vehicle positioning may be corrected through displacement and/or rotation.

For example, the map data can include map road information A, map road information B and map road information C. The navigation and positioning system in the vehicle may determine that the current vehicle positioning in the map data is on a road A corresponding to the map road information A, and it may be determined that the target map road information is the map road information B; then the vehicle positioning correction information may be determined based on the map road information A and the map road information B, and the vehicle may be displaced and rotated in the map data based on the correction information, so as to correct the positioning of the vehicle.

In this embodiment of the present invention, real-time road information is acquired when it is detected that a vehicle is on a road of a target road type; map data is acquired and a plurality of pieces of map road information are determined from the map data; target map road information matching the real-time road information is determined from the plurality of pieces of map road information; and positioning correction is performed on the vehicle based on the real-time road information and the target map road information, so that accurate positioning correction is performed on roads of different road types, positioning accuracy is ensured, and accuracy of dead reckoning and safety of vehicle driving are improved.

Referring to Fig. 2a, a flowchart of steps of another method for vehicle positioning according to an embodiment of the present invention is illustrated. The method may specifically include the following steps:

step 201: acquiring real-time road information when it is detected that a vehicle is on a road of a target road type;
step 202: acquiring map data and acquiring vehicle positioning information;
where the positioning information may be the positioning information of the vehicle in the map data.

After real-time road information is acquired, the map data for the current road may be downloaded from the cloud, or the map data for the current road may be acquired from a preset map database in the vehicle, and then the positioning information of the vehicle in the map data may be determined in real time based on a navigation and positioning system in the vehicle.

Step 203: determining road positioning information corresponding to the positioning information from the map data;

where the road positioning information may be road information corresponding to the positioning information in the map data.

After the positioning information of the vehicle is acquired, the road information of the vehicle in the map data may be determined based on the positioning information and positioning accuracy information in the map data.

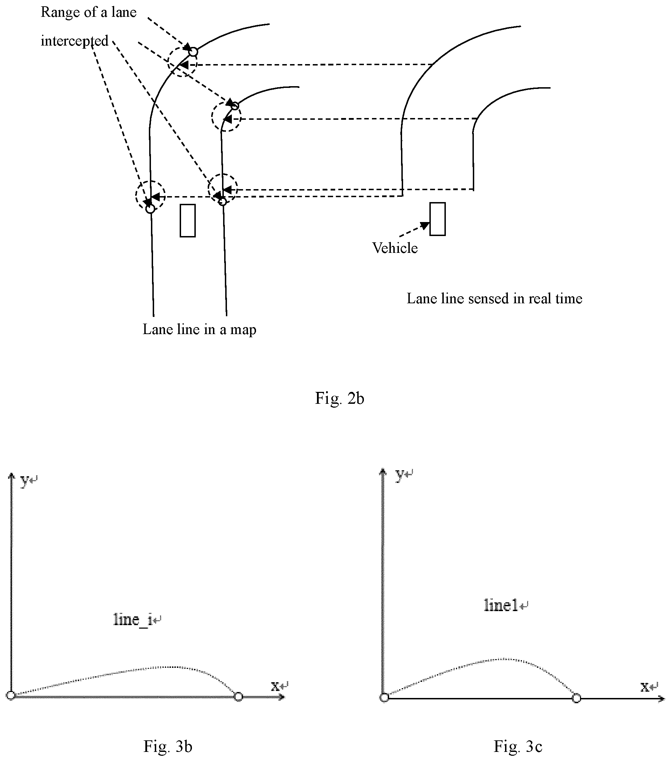

As shown in Fig. 2b, the road information of the road where the vehicle is currently located may be determined from the map data based on the positioning accuracy information in the map data, i.e., the range of a lane line intercepted in the map data may be determined, and then a lane line longer than a lane line in the real-time road information may be determined from the map data, i.e., the length of the lane line on the map is greater than the length of the lane line sensed in real time.

For example, the length of the lane line in the real-time road information may be 5 meters, and the length of the lane line in the map data may be 7 meters, i.e., the length of the lane line in the road positioning information may be 7 meters.

Step 204: determining plurality of pieces of map road information based on the road positioning information;

where after the road positioning information is determined, the road positioning information may be divided, and then a plurality of pieces of road information in the map data may be determined.

For example, lane line information in the road positioning information may be determined, and then a lane line corresponding to the lane line information may be divided to determine information on a plurality of lane lines.

In an embodiment of the present invention, step 204 may further include the following sub-steps: Sub-step 11: determining a length of a real-time lane line corresponding to the real-time road information;

where after the road positioning information is determined, lane line information in the real-time road information can be determined, then the corresponding lane line can be determined, and the length of the lane line is determined in real time.

In practice, since the sensing system in the vehicle has a certain sensing range, i.e., the sensed lane line should be within a certain length range, it is necessary to determine the length of the sensed lane line in real time. For example, the sensing range of the sensing system may be within 5 meters; if the actual lane line length is 6 meters, the length of the lane line sensed by the sensing system should be 5 meters, and if the actual lane line length is 4 meters, the length of the lane line sensed by the sensing system should be 4 meters.

Sub-step 12: determining lane line segmentation information corresponding to the road positioning information based on the length of the real-time lane line;
where the lane line segmentation information may be to divide a lane line corresponding to the lane line information in the road positioning information.

After the length of the real-time lane line is determined, the lane line corresponding to the lane line information in the road positioning information may be divided based on a preset length, or the lane line may be equally divided based on a preset number of segments, and then the lane line segmentation information of the road positioning information may be obtained.

For example, if the length of the real-time lane line is 5 meters, the length of the lane line in the road positioning information may be 7 meters, and the preset number of segments may be 10, the lane line may be equally divided, and then it can be determined that the lane line segment information is that division is performed every 0.5 meter, so that lane line information of fourteen 0.5 m lane lines can be obtained.

For another example, if the length of the real-time lane line may be 5 meters, the length of the lane line in the road positioning information may be 7 meters, and the preset length may be 2 meters, then the lane line may be divided based on the preset length, i.e., the lane line segmentation information may be that division is performed every 2 meters, and then road information of three 2 m lane lines and one 1 m lane line can be obtained.

In an embodiment of the present invention, after the length of the real-time lane line is determined, the lane line corresponding to the real-time road information may be divided based on a preset length, or the lane line corresponding to the real-time road information may be equally divided based on a preset number of segments, and then lane line segmentation information of the real-time road information can be obtained.

The lane line segmentation information of the real-time road information may be the same as the lane line segmentation information of the road positioning information.

Sub-step 13: determining a plurality of pieces of map road information corresponding to the road positioning information based on the lane line segmentation information.

After the lane line segmentation information of the road positioning information is determined, the lane lines corresponding to the lane line information in the road positioning information may be divided based on the lane line segmentation information, and then a plurality of lane lines can be determined.

After the plurality of lane lines are obtained, the plurality of lane lines may be combined based on the length of the real-time lane line and the sequence of the plurality of lane lines, and then a plurality of lane line combinations with the same length as the real-time lane line can be obtained.

For example, 14 lane lines may be combined based on the sequence of lane lines, and then a combination of the first to 11$^{th}$ lane lines, a combination of the second to 12$^{th}$ lane lines, a combination of the third to 13$^{th}$ lane lines and a combination of the 4$^{th}$ to 14$^{th}$ lane lines may be determined, and the length of each lane line combination is equal to the length of the real-time lane line.

Step 205: determining target map road information matching the real-time road information from the plurality of pieces of map road information; and
step 206: performing positioning correction on the vehicle based on the real-time road information and the target map road information.

In this embodiment of the present invention, real-time road information is acquired when it is detected that a vehicle is on a road of a target road type; map data is acquired and vehicle positioning information is acquired; road positioning information corresponding to the positioning information is determined from the map data; a plurality of pieces of map road information are determined based on the road positioning information; target map road information matching the real-time road information is determined from the plurality of pieces of map road information; and positioning correction is performed on the vehicle based on the real-time road information and the target map road information, so that accurate positioning correction is performed on roads of different road types, positioning accuracy is ensured, accuracy of dead reckoning is improved based on accurate positioning, and safety of vehicle driving is improved.

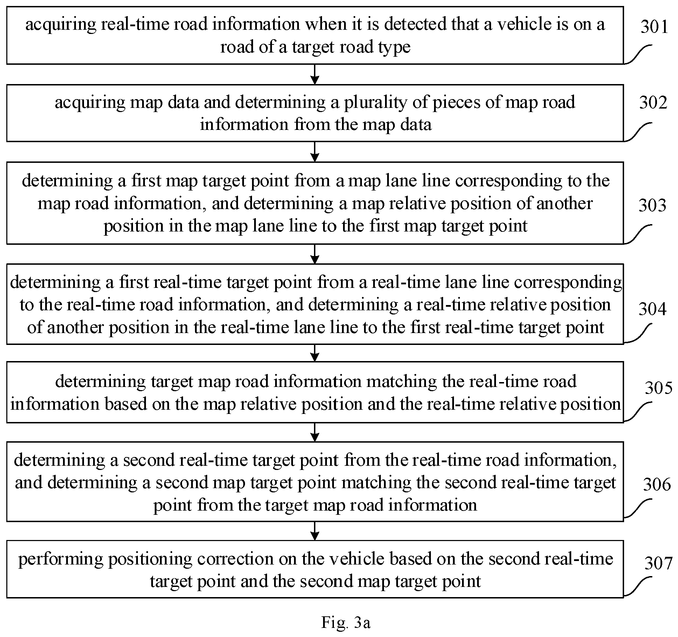

Referring to Fig. 3a, a flowchart of steps of still another method for vehicle positioning according to an embodiment of the present invention is illustrated. The method may specifically include the following steps:

    step 301: acquiring real-time road information when it is detected that a vehicle is on a road of a target road type;
    step 302: acquiring map data and determining a plurality of pieces of map road information from the map data;
    step 303: determining a first map target point from a map lane line corresponding to the map road information, and determining a map relative position of another position on the map lane line to the first map target point;
where the map target point may be any point of the lane line in the map data, such as an endpoint.

After a plurality of pieces of map road information are determined, for example, after a plurality of lane line combinations are determined, position information of any target point in the lane line combinations may be determined separately. For example, position information of a beginning endpoint of a lane line combination is determined, and position information of another point in the lane line combination is determined. For example, position information of an end endpoint of the lane line combination is determined, and then relative position information of the target point and said another point can be determined based on the position information.

In practice, position information of a beginning endpoint of a lane line combination may be determined, and a coordinate system is established with the beginning endpoint as the origin. As shown in Fig. 3b, the lane line combination, i.e., line_i, may be rotated in the coordinate system, so that an end endpoint of the lane line combination is located on the coordinate axis of the coordinate system, such as an abscissa x axis, and then a relative position of any point in the lane line combination to the beginning endpoint can be determined based on the coordinate system, and the relative position may be a vertical coordinate of any point in the coordinate system.

Step 304: determining a first real-time target point from the real-time lane line corresponding to the real-time road information, and determining a real-time relative position of another position on the real-time lane line to the first real-time target point;
where the real-time target point may be any point in the lane line corresponding to the real-time lane line, such as an endpoint.

After the map relative position is determined, a lane line corresponding to the lane line information in the real-time road information may be determined, and position information of any target point in the lane line, such as position information of the beginning endpoint, may be determined. Then position information of another point in the lane line, such as position information of another endpoint, is determined. Then relative position information of the target point to said another point can be determined based on the position information.

In practice, position information of a beginning endpoint of a lane line in the real-time road information may be determined, and a coordinate system is established with the beginning endpoint as the origin. As shown in Fig. 3c, the lane line, i.e., line_1, may be rotated in the coordinate system, so that an end endpoint of the lane line is located on the coordinate axis of the coordinate system, such as an abscissa x axis, then a relative position of any point in the lane line to the beginning endpoint of the lane line can be determined based on the coordinate system, and the relative position may be a vertical coordinate of any point in the coordinate system.

Step 305: determining target map road information matching the real-time road information based on the map relative position and the real-time relative position; where when the map relative position and real-time relative position are determined, map relative positions of the first map target point to a plurality of other endpoints in map data may be determined, real-time relative positions of the first real-time target point to the plurality of other endpoints in the real-time road information may be determined, and then a plurality of map relative positions and real-time relative positions may be determined.

After the plurality of map relative positions and real-time relative positions are determined, since lane line segmentation information of the real-time road information may be the same as lane line segmentation information of road positioning information, endpoints in a plurality of lane line combinations may in one-to-one correspondence with endpoints of lane lines in the real-time road information, and then endpoints corresponding to the real-time relative positions may be determined in the map relative positions.

For example, since the lane line segmentation information of the real-time road information may be the same as that of the road positioning information, i.e., the lane line in the real-time road information may be divided into 14 lane lines and the lane line combination may include 14 lane lines, then the first lane line of the lane line in the real-time road information may correspond to the first lane line of the lane line combination, and an endpoint of the first lane line of the lane line in the real-time road information may also correspond to an endpoint of the first lane line of the lane line combination.

After the corresponding endpoints are determined, a matching error value between the map relative position and the real-time relative position may be iteratively calculated, and when the matching error value is a minimum, a map lane line corresponding to the map relative position and a real-time lane line corresponding to the real-time relative position may be regarded as matching lane lines, i.e., the target map road information matching the real-time road information is determined.

In practice, vertical coordinates of a plurality of points of a plurality of lane line combinations in the coordinate system may be determined separately, vertical coordinates of a plurality of points of lane lines in the real-time road information may be determined, and then the matching error value of vertical coordinates between corresponding endpoints may be iteratively calculated, so as to determine the corresponding lane line combination to be a lane line combination matching the lane line in real-time road information when the matching error value is a minimum.

For example, it is possible to calculate the matching error value between the first lane line of the lane line in the real-time road information and the first lane line of the lane line combination, and continue to calculate up to the matching error value between the 14th lane lines, the plurality of matching error values may be summed and divided by the length of the lane line, and then the matching error value between the lane line in the real-time road information and the lane line combination, so as to determine the lane line in the real-time road information and the lane line combination with the minimum matching error value to be matching lane lines.

Step 306: determining a second real-time target point from the real-time road information, and determining a second map target point matching the second real-time target point from the target map road information; where after the target map road information matching the real-time road information is determined, the lane line corresponding to the lane line information in the real-time road information may be determined, and position information of any point in the lane line may be determined.

After any point in the lane line corresponding to the real-time road information is determined, position information of any point in the matching lane line combination may be determined.

In practice, position information of an end endpoint in the lane line corresponding to the real-time road information may be determined, and position information of an end endpoint in the matching lane line combination may be determined.

Step 307: performing positioning correction on the vehicle based on the second real-time target point and the second map target point.

After the second real-time target point and the second map target point are determined, a difference value between the second real-time target point and the second map target point may be calculated, and then correction information of vehicle positioning information may be calculated based on the difference value, so as to correct the vehicle positioning information based on the correction information, such as by displacement and/or rotation.

In an example, the correction information may include position correction information and deflection correction information.

In practice, the correction information may be calculated by using the following formula:

$$\min_{R,t} J = \frac{1}{2} \sum_{i=1}^{n} \left\| \left( P_i - \left( R * P_i' + t \right) \right) \right\|^2$$

where $P_i$ and $P_i'$ may be position information of endpoints where the lane line combination in the map data matches the lane line in the real-time road information, R may be position correction information, t may be deflection correction information, and J may be a cost function, which is used to determine a plurality of values based on the position information of the endpoints, determine the minimum value among the plurality of values, and determine that R and t corresponding to the minimum value as correction information.

In this embodiment of the present invention, real-time road information is acquired when it is detected that a vehicle is on a road of a target road type; map data is acquired and a plurality of pieces of map road information are determined from the map data; a first map target point is determined from a map lane line corresponding to the map road information, and a map relative position of another position on the map lane line to the first map target point is determined; a first real-time target point is determined from the real-time lane line corresponding to the real-time road information, and a real-time relative position of another position on the real-time lane line to the first real-time target point is determined; target map road information matching the real-time road information is determined based on the map relative position and the real-time relative position; a second real-time target point is determined from the real-time road information, and a second map target point matching the second real-time target point is determined from the target map road information; positioning correction is performed on the vehicle based on the second real-time target point and the second map target point, so that accurate positioning is performed on roads of different road types, positioning correction is performed on the vehicle based on the real-time target point and the map target point, positioning accuracy is ensured, and accuracy of dead reckoning and safety of vehicle driving are improved.

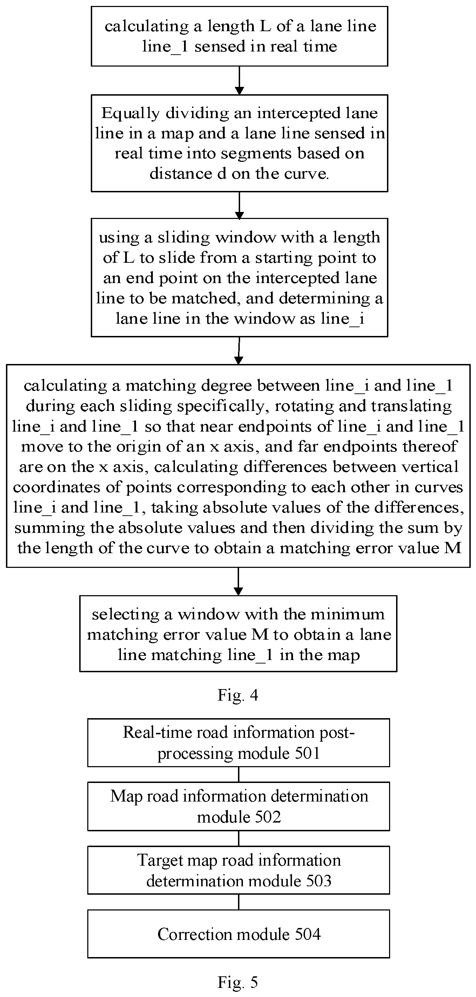

The following is an exemplary description of an embodiment of lane line matching according to the present invention with reference to Fig. 4:

1. In the actual matching process, a lane line where a vehicle is currently located can be sensed in real time by a sensing system in the vehicle, and then a length L of the lane line line_1 sensed in real time can be calculated by means of image processing, ultrasonic ranging, etc.

2. After the length of the lane line sensed in real time is calculated, the lane line within the accuracy range can be intercepted from the lane line corresponding to the map data, and then the lane line sensed in real time and the intercepted lane line in the map data can be divided based on the preset length. For example, the lane line sensed in real time and the intercepted lane line in the map data can be equally divided into a plurality of points based on the distance d of the lane line for division.

3. After the lane line sensed in real time and the intercepted lane line in the map data are divided, the lane lines after division in the map data can be combined based on the length of the real-time lane line line and the sequence of lane lines.

In practice, an endpoint of one lane line in the map data after division may be determined as a starting point, for example, an endpoint of the first lane line is determined as the starting point, and then a sliding window with a length of L may be used to slide from the starting point to the end point, i.e., slide by a distance of the length L from the starting point, and a lane line in the sliding window may be determined as line_i.

4. When line_i in map data is determined, lane lines line_i with different starting points can be determined, and then the matching degree between each line_i and the real-time lane line line_1 can be calculated. As shown in Fig. 3b, a coordinate system may be established based on the starting points of line_i and line_1 separately, i.e., based on the near endpoints, and line_i and line_1 are separately rotated in the coordinate system. In this way, end endpoints of line_i and line_1, i.e., far endpoints, are located on the abscissa x axis of the coordinate system, and then vertical coordinates of points corresponding to each other in line_i and line_1 can be determined to calculate the vertical coordinates and obtain a matching error value.

In practice, differences between the vertical coordinates of points corresponding to each other in line_i and line_1 can be made, and the absolute values of the differences are taken. The absolute values may be summed and divided by the length L of the lane line line_1 sensed in real time, and then a matching error value M can be obtained.

5. After the matching error value M is obtained, the window with the minimum value of M can be selected, i.e., the corresponding line_i can be selected, and then line_i can be determined as the lane line matching line_1.

It should be noted that, for brief description, the method embodiments are all expressed as a series of action combinations, but a person skilled in the art should know that the embodiments of the present invention are not limited by the described action sequence, because some steps may be performed in other sequences or simultaneously based on the embodiments of the present invention. A person skilled in the art should also know that the embodiments described in the specification are all preferred embodiments, and the actions involved are not necessarily required by the embodiments of the present invention.

Referring to Fig. 5, a schematic structural diagram of an apparatus for vehicle positioning according to an embodiment of the present invention is illustrated. The apparatus may specifically include the following modules:

a real-time road information post-processing module 501, configured to acquire real-time road information when it is detected that a vehicle is on a road of a target road type;

a map road information determination module 502, configured to acquire map data and determine a plurality of pieces of map road information from the map data;

a target map road information determination module 503, configured to determine target map road information matching the real-time road information from the plurality of pieces of map road information; and a correction module 504, configured to perform positioning correction on the vehicle based on the real-time road information and the target map road information.

In an embodiment of the present invention, the map road information determination module 502 further includes:

a positioning information acquisition submodule, configured to acquire positioning information of the vehicle;
a road positioning information determining submodule, configured to determine road positioning information corresponding to the positioning information from the map data; and
a submodule for determining a plurality of pieces of map road information, configured to determine a plurality of pieces of map road information based on the road positioning information.

In an embodiment of the present invention, the submodule for determining a plurality of pieces of map road information further includes:

a unit for determining a length of a real-time lane line, configured to determine a length of a real-time lane line corresponding to the real-time road information;
a segmentation information determining unit, configured to determine lane line segmentation information corresponding to the road positioning information based on the length of the real-time lane line; and
a unit for determining corresponding map road information, configured to determine a plurality of pieces of map road information corresponding to the road positioning information based on the lane line segmentation information.

In an embodiment of the present invention, the target map road information determination module 503 further includes:

a submodule for determining a map relative position, configured to determine a first map target point from a map lane line corresponding to the map road information, and determine a map relative position of another position on the map lane line to the first map target point;
a submodule for determining a real-time relative position, configured to determine a first real-time target point from the real-time lane line corresponding to the real-time road information, and determine a real-time relative position of another position on the real-time lane line to the first real-time target point; and

a submodule for determining matching target map road information, configured to determine the target map road information matching the real-time road information based on the map relative position and the real-time relative position.

In an embodiment of the present invention, the correction module 504 further includes:

a submodule for determining a second map target point, configured to determine a second real-time target point from the real-time road information, and determine a second map target point matching the second real-time target point from the target map road information; and
a positioning correction submodule, configured to perform positioning correction on the vehicle based on the second real-time target point and the second map target point.

In an embodiment of the present invention, the apparatus further includes:
a road type determination module, configured to determine, from the map data, the road type of the road where the vehicle is located.

In this embodiment of the present invention, real-time road information is acquired when it is detected that a vehicle is on a road of a target road type; map data is acquired and a plurality of pieces of map road information are determined from the map data; a first map target point is determined from a map lane line corresponding to the map road information, and a map relative position of another position on the map lane line to the first map target point is determined; a first real-time target point is determined from the real-time lane line corresponding to the real-time road information, and a real-time relative position of another position on the real-time lane line to the first real-time target point is determined; target map road information matching the real-time road information is determined based on the map relative position and the real-time relative position; a second real-time target point is determined from the real-time road information, and a second map target point matching the second real-time target point is determined from the target map road information; positioning correction is performed on the vehicle based on the second real-time target point and the second map target point, so that accurate positioning is performed on roads of different road types, positioning correction is performed on the vehicle based on the real-time target point and the map target point, positioning accuracy is ensured, and accuracy of dead reckoning and safety of vehicle driving are improved.

An embodiment of the present invention further provides a vehicle, which may include a processor, a memory and a computer program stored in the memory and capable of running on the processor, where when the computer program is executed by the processor, the above-mentioned method for vehicle positioning is implemented.

An embodiment of the present invention further provides a computer-readable storage medium, where the computer-readable storage medium stores a computer program, and when the computer program is executed by a processor, the above-mentioned method for vehicle positioning is implemented.

Because the apparatus embodiments are substantially similar to the method embodiments, the description is relatively simple, and for the relevant parts, references may be made to the description of the method embodiments.

Each embodiment in the present specification is described in a progressive way. Each embodiment focuses on differences from other embodiments. For the same or similar parts between the embodiments, references may be made to each other.

A person skilled in the art should understand that the embodiments of the present invention may be provided as a method, an apparatus, or a computer program product. Therefore, the embodiments of the present invention may use a form of complete hardware embodiments, complete software embodiments, or embodiments with a combination of software and hardware. Moreover, the embodiments of the present invention may use a form of a computer program product that is implemented on one or more computer-usable storage media (including but not limited to a disk memory, a CD-ROM and an optical memory) that include computer-usable program code.

The embodiments of the present invention are described with reference to flowcharts and/or block diagrams of methods, terminal devices (systems), and computer program products according to the embodiments of the present invention. It should be understood that each flow and/or block in the flowcharts and/or block diagrams, and combinations of flows and/or blocks in the flowcharts and/or block diagrams may be implemented by using computer program instructions. These computer program instructions may be provided to a processor of a general-purpose computer, a special-purpose computer, an embedded processor or another programmable data processing terminal device to produce a machine, so that the instructions executed by the processor of the computer or another programmable data processing terminal device produce an apparatus for implementing functions specified in one or more flows in the flowchart and/or one or more blocks in the block diagram.

These computer program instructions may also be stored in a computer-readable memory that can direct a computer or another programmable data processing terminal device to operate in a specific way, so that the instructions stored in the computer-readable memory produce an article of manufacture including an instruction apparatus, and the instruction apparatus implements functions specified in one or more flows of the flowchart and/or one or more blocks of the block diagram.

These computer program instructions may also be loaded onto a computer or another programmable data processing terminal device, so that a series of operation steps are performed on the computer or another programmable terminal device to perform computer-implemented processing, and thus the instructions executed on the computer or another programmable terminal device provide steps for implementing functions specified in one or more flows of the flowchart and/or one or more blocks of the block diagram.

Relational terms such as "first" and "second" herein are only used to distinguish one entity or operation from another entity or operation, and do not necessarily require or imply the presence of any such actual relationship or order between these entities or operations. Moreover, the term "comprise", "include", or any other variant thereof is intended to encompass a non-exclusive inclusion, so that a process, method, article, or terminal device that includes a series of elements includes not only those elements, but also other elements not explicitly listed, or elements that are inherent to such a process, method, article, or terminal device. Without more restrictions, an element defined by the phrase "including a ..." does not exclude the presence of another same element in a process, method, article, or terminal device that includes the element.

**Claims**

1. A method for vehicle positioning, comprising:

acquiring real-time road information when it is detected that a vehicle is on a road of a target road type, wherein road types include a straight road type, a curve type and a branch road type;
acquiring map data and determining a plurality of pieces of map road information from the map data;
determining target map road information matching the real-time road information from the plurality of pieces of map road information; and
performing positioning correction on the vehicle based on the matched real-time road information and the target map road information;
wherein said determining a plurality of pieces of map road information from the map data comprises:

acquiring positioning information of the vehicle;
determining road positioning information corresponding to the positioning information from the map data; and
determining the plurality of pieces of map road information based on the road positioning information;

**characterized in that**

said determining the plurality of pieces of map road information based on the road positioning information comprises:

determining a length of a real-time lane line corresponding to the real-time road information;
determining lane line segmentation information corresponding to the road positioning information, where the lane segmentation information is determined either (i) by dividing the length of the real-time lane line by a preset length, or (ii) by dividing equally the length of the real-time lane line into a preset number of segments; and
determining the plurality of pieces of map road information corresponding to the road positioning information based on the lane line segmentation information.

2. The method of claim 1, wherein said determining target map road information matching the real-time road information from the plurality of pieces of map road information comprises:

determining a first map target point from a map lane line corresponding to the map road information, and determining a map relative position of another position on the map lane line to the first map target point, wherein the first map target point may be any point of the lane line in the map data;
determining a first real-time target point from the real-time lane line corresponding to the real-time road information, and determining a real-time relative position of another position on the real-time lane line to the first real-time target point, wherein the first real-time target point may be any point in the lane line corresponding to the real-time lane line; and
determining the target map road information matching the real-time road information based on the map relative position and the real-time relative position.

3. The method of claim 2, wherein said performing positioning correction on the vehicle based on the real-time road information and the target map road information comprises:

determining a second real-time target point from the real-time road information, and determining a second map target point matching the second real-time target point from the target map road information; and
performing positioning correction on the vehicle based on the second real-time target point and the second map target point.

4. The method of claim 1, further comprising, before said acquiring real-time road information when it is detected that a vehicle is on a road of a target road type:
determining, from the map data, the road type of the road where the vehicle is located.

5. The method of claim 1, wherein the target road type is a curve type.

6. An apparatus for vehicle positioning, comprising:

a real-time road information post-processing module, configured to acquire real-time road information when it is detected that a vehicle is on a road of a target road type, wherein road types include a straight road type, a curve type and a branch road type;
a map road information determination module, configured to acquire map data and determine a plurality of pieces of map road information from the map data;
a target map road information determination module, configured to determine target map road information matching the real-time road information from the plurality of pieces of map road information; and
a correction module, configured to perform positioning correction on the vehicle based on the matched real-time road information and the target map road information;
wherein the map road information determination module is further configured to:

acquire positioning information of the vehicle;
determine road positioning information corresponding to the positioning information from the map data; and
determine the plurality of pieces of map road information based on the road positioning information;

**characterized in that**
said map road information determination module is configured to:

determine a length of a real-time lane line corresponding to the real-time road information;
determine lane line segmentation information corresponding to the road positioning information, where the lane line segmentation information is determined either (i) by dividing the length of the real-time lane line by a preset length, or (ii) by dividing equally the length of the real-time lane line into a preset number of segments; and

determine the plurality of pieces of map road information corresponding to the road positioning information based on the lane line segmentation information

**7.** The apparatus of claim 6, wherein the target map road information determination module is further configured to:

determine a first map target point from a map lane line corresponding to the map road information, and determine a map relative position of another position on the map lane line to the first map target point, wherein the first map target point may be any point of the lane line in the map data;

determine a first real-time target point from the real-time lane line corresponding to the real-time road information, and determine a real-time relative position of another position on the real-time lane line to the first real-time target point, wherein the first real-time target point may be any point in the lane line corresponding to the real-time lane line; and

determine the target map road information matching the real-time road information based on the map relative position and the real-time relative position.

**8.** The apparatus of claim 7, wherein the correction module is further configured to:

determine a second real-time target point from the real-time road information, and determine a second map target point matching the second real-time target point from the target map road information; and

perform positioning correction on the vehicle based on the second real-time target point and the second map target point.

**9.** The apparatus of claim 6, further comprising: means for determining, from the map data, before acquiring the real-time road information, the road type of the road where the vehicle is located.

**10.** A vehicle, comprising a processor, memory and a computer program stored on the memory and capable of running on the processor, wherein execution of the computer program by the processor results in performance of the method for vehicle positioning according to any one of claims 1 to 5.

**11.** A computer-readable storage medium having a computer program stored thereon which, when executed by a processor, results in performance of the method for vehicle positioning according to any one of claims 1 to 5.

**Patentansprüche**

**1.** Verfahren zur Fahrzeugortung, das Folgendes beinhaltet:

Erfassen von Echtzeit-Straßeninformationen, wenn erkannt wird, dass sich ein Fahrzeug auf einer Straße eines Zielstraßentyps befindet, wobei Straßentypen einen geraden Straßentyp, einen Kurventyp und einen Abzweigstraßentyp umfassen;

Erfassen von Kartendaten und Bestimmen mehrerer Kartenstraßeninformationen aus den Kartendaten;

Bestimmen von mit den Echtzeit-Straßeninformationen übereinstimmenden Ziel-Kartenstraßeninformationen aus den mehreren Kartenstraßeninformationen; und

Durchführen einer Positionskorrektur für das Fahrzeug auf der Basis der übereinstimmenden Echtzeit-Straßeninformationen und der Ziel-Kartenstraßeninformationen;

wobei das genannte Bestimmen mehrerer Kartenstraßeninformationen aus den Kartendaten Folgendes beinhaltet:

Erfassen von Positionsinformationen des Fahrzeugs;

Bestimmen von Straßenpositionsinformationen entsprechend den Positionsinformationen aus den Kartendaten; und

Bestimmen der mehreren Kartenstraßeninformationen auf der Basis der Straßenpositionsinformationen;

**dadurch gekennzeichnet, dass**

das genannte Bestimmen der mehreren Kartenstraßeninformationen auf der Basis der Straßenpositionsinformationen Folgendes beinhaltet:

Bestimmen einer Länge einer Echtzeit-Fahrspurlinie entsprechend den Echtzeit-Straßeninformationen;

Bestimmen von Fahrspurliniesegmentierungsinformationen entsprechend den Straßenpositionsinformationen, wobei die Fahrspurliniesegmentierungsinformationen entweder (i) durch Dividieren der Länge der Echtzeit-Fahrspurlinie durch eine voreingestellte Länge oder (ii) durch gleichmäßiges Unterteilen der Länge der Echtzeit-Fahrspurlinie in eine voreingestellte Anzahl von Segmenten bestimmt werden; und

Bestimmen der mehreren Kartenstraßeninformationen entsprechend den Straßenpositionsinformationen auf der Basis der Fahrspurliniesegmentierungsinformationen.

2. Verfahren nach Anspruch 1, wobei das genannte Bestimmen der mit den Echtzeit-Straßeninformationen übereinstimmenden Ziel-Kartenstraßeninformationen aus den mehreren Kartenstraßeninformationen Folgendes beinhaltet:

   Bestimmen eines ersten Kartenzielpunkts aus einer Kartenfahrspurlinie entsprechend den Kartenstraßeninformationen, und Bestimmen einer Kartenrelativposition einer anderen Position auf der Kartenfahrspurlinie zum ersten Kartenzielpunkt, wobei der erste Kartenzielpunkt ein beliebiger Punkt der Fahrspurlinie in den Kartendaten sein kann;
   Bestimmen eines ersten Echtzeit-Zielpunkts aus der Echtzeit-Fahrspurlinie entsprechend den Echtzeit-Straßeninformationen, und Bestimmen einer EchtzeitRelativposition einer anderen Position auf der Echtzeit-Fahrspurlinie zum ersten Echtzeit-Zielpunkt, wobei der erste Echtzeit-Zielpunkt ein beliebiger Punkt auf der Fahrspurlinie sein kann, der der Echtzeit-Fahrspurlinie entspricht; und
   Bestimmen der mit der Echtzeit-Straßeninformation übereinstimmenden Ziel-Kartenstraßeninformation auf der Basis der Kartenrelativposition und der Echtzeitrelativposition.

3. Verfahren nach Anspruch 2, wobei das genannte Durchführen einer Positionskorrektur für das Fahrzeug auf der Basis der Echtzeit-Straßeninformationen und der Ziel-Kartenstraßeninformationen Folgendes beinhaltet:

   Bestimmen eines zweiten Echtzeit-Zielpunkts aus den Echtzeit-Straßeninformationen und Bestimmen eines mit dem zweiten Echtzeit-Zielpunkt übereinstimmenden zweiten Kartenzielpunkts aus den Ziel-Kartenstraßeninformationen; und
   Durchführen einer Positionskorrektur für das Fahrzeug auf der Basis des zweiten Echtzeit-Zielpunkts und des zweiten Kartenzielpunkts.

4. Verfahren nach Anspruch 1, das ferner, vor dem genannten Erfassen der Echtzeit-Straßeninformationen, wenn festgestellt wird, dass sich ein Fahrzeug auf einer Straße eines Zielstraßentyps befindet, Folgendes beinhaltet:
   Bestimmen, anhand der Kartendaten, des Straßentyps der Straße, auf der sich das Fahrzeug befindet.

5. Verfahren nach Anspruch 1, wobei der Zielstraßentyp ein Kurventyp ist.

6. Vorrichtung zur Fahrzeugortung, die Folgendes umfasst:

ein Echtzeit-Straßeninformationsnachbearbeitungsmodul, konfiguriert zum Erfassen von Echtzeit-Straßeninformationen, wenn erkannt wird, dass sich ein Fahrzeug auf einer Straße eines Zielstraßentyps befindet, wobei die Straßentypen einen geraden Straßentyp, einen Kurventyp und einen Abzweigstraßentyp umfassen;
ein Kartenstraßeninformationsbestimmungsmodul, konfiguriert zum Erfassen von Kartendaten und zum Bestimmen mehrerer Kartenstraßeninformationen aus den Kartendaten;
ein Ziel-Kartenstraßeninformationsbestimmungsmodul, konfiguriert zum Betimmen von mit den Echtzeit-Straßeninformationen übereinstimmenden Ziel-Kartenstraßeninformationen aus den mehreren Kartenstraßeninformationen; und
ein Korrekturmodul, konfiguriert zum Durchführen einer Positionskorrektur für das Fahrzeug auf der Basis der übereinstimmenden Echtzeit-Straßeninformationen und der Ziel-Kartenstraßeninformationen;
wobei das Kartenstraßeninformationsbestimmungsmodul ferner konfiguriert ist zum:

   Erfassen von Positionsinformationen des Fahrzeugs;
   Bestimmen von Straßenpositionsinformationen entsprechend den Positionsinformationen aus den Kartendaten; und
   Bestimmen der mehreren Kartenstraßeninformationen auf der Basis der Straßenpositionsinformationen;

**dadurch gekennzeichnet, dass** das genannte Kartenstraßeninformationensbestimmungsmodul konfiguriert ist zum:

   Bestimmen einer Länge einer Echtzeit-Fahrspurlinie entsprechend den Echtzeit-Straßeninformationen;
   Bestimmen von Fahrspurliniesegmentierungsinformationen entsprechend den Straßenpositionsinformationen, wobei die Fahrspurliniesegmentierungsinformationen entweder (i) durch Dividieren der Länge der Echtzeit-Fahrspurlinie durch eine voreingestellte Länge oder (ii) durch gleichmäßiges Unterteilen der Länge der Echtzeit-Fahrspurlinie in eine voreingestellte Anzahl von Segmenten bestimmt werden; und
   Bestimmen der mehreren Kartenstraßeninformationen entsprechend den Straßenpositionsinformationen auf der Basis der Fahrspurliniesegmentierungsinformationen.

7. Vorrichtung nach Anspruch 6, wobei das Ziel-Kartenstraßeninformationsbestimmungsmodul ferner konfiguriert ist zum:

> Bestimmen eines ersten Kartenzielpunkts aus einer Kartenfahrspurlinie entsprechend den Kartenstraßeninformationen und Bestimmen einer Kartenrelativposition einer anderen Position auf der Kartenfahrspurlinie zum ersten Kartenzielpunkt, wobei der erste Kartenzielpunkt ein beliebiger Punkt der Fahrspurlinie in den Kartendaten sein kann;
> Bestimmen eines ersten Echtzeit-Zielpunkts aus der Echtzeit-Fahrspurlinie entsprechend den Echtzeit-Straßeninformationen, und Bestimmen einer EchtzeitRelativposition einer anderen Position auf der Echtzeit-Fahrspurlinie zum ersten Echtzeit-Zielpunkt, wobei der erste Echtzeit-Zielpunkt ein beliebiger Punkt auf der Fahrspurlinie sein kann, der der Echtzeit-Fahrspurlinie entspricht; und
> Bestimmen der mit der Echtzeit-Straßeninformation übereinstimmenden Ziel-Kartenstraßeninformation auf der Basis der Kartenrelativposition und der Echtzeitrelativposition.

8. Vorrichtung nach Anspruch 7, wobei das Korrekturmodul ferner konfiguriert ist zum:

> Bestimmen eines zweiten Echtzeit-Zielpunkts aus den Echtzeit-Straßeninformationen und Bestimmen eines mit dem zweiten Echtzeit-Zielpunkt übereinstimmenden zweiten Karten-Zielpunkt aus den Ziel-Kartenstraßeninformationen; und
> Durchführen einer Positionskorrektur für das Fahrzeug auf der Basis des zweiten Echtzeitzielpunkts und des zweiten Kartenzielpunkts.

9. Vorrichtung nach Anspruch 6, die ferner Folgendes umfasst:
Mittel zum Bestimmen des Straßentyps der Straße, auf der sich das Fahrzeug befindet, aus den Kartendaten, bevor die Echtzeit-Straßeninformationen erfasst werden.

10. Fahrzeug, das einen Prozessor, einen Speicher und ein auf dem Speicher gespeichertes und auf dem Prozessor ausführbares Computerprogramm umfasst, wobei die Ausführung des Computerprogramms durch den Prozessor zur Durchführung des Verfahrens zur Fahrzeugortung nach einem der Ansprüche 1 bis 5 führt.

11. Computerlesbares Speichermedium mit einem darauf gespeicherten Computerprogramm, das bei Ausführung durch einen Prozessor zur Durchführung des Verfahrens zur Fahrzeugortung nach einem der Ansprüche 1 bis 5 führt.

## Revendications

1. Procédé de positionnement de véhicule, comprenant :

> une acquisition d'informations routières en temps réel lorsqu'il est détecté qu'un véhicule se trouve sur une route d'un type de route cible, dans lequel les types de route comprennent un type de route droite, un type de courbe et un type de route à embranchement ;
> une acquisition de données cartographiques et une détermination d'une pluralité d'éléments d'informations routières cartographiques à partir des données cartographiques ;
> une détermination d'informations routières cartographiques cibles correspondant aux informations routières en temps réel à partir de la pluralité d'éléments d'informations routières cartographiques ; et
> une exécution d'une correction de positionnement sur le véhicule sur la base des informations routières en temps réel correspondantes et des informations routières cartographiques cibles ;
> dans lequel ladite détermination d'une pluralité d'éléments d'informations routières cartographiques à partir des données cartographiques comprend :

>> une acquisition d'informations de positionnement du véhicule ;
>> une détermination d'informations de positionnement routier correspondant aux informations de positionnement à partir des données cartographiques ; et
>> une détermination de la pluralité d'éléments d'informations routières cartographiques sur la base des informations de positionnement routier ;

>> caractérisé en ce que ladite détermination de la pluralité d'éléments d'informations routières cartographiques sur la base des informations de positionnement routier comprend :

>>> une détermination d'une longueur d'une ligne de voie en temps réel correspondant aux informations routières en temps réel ;
>>> une détermination d'informations de segmentation de ligne de voie correspondant aux informations de positionnement routier, dans lequel les informations de segmentation de ligne de voie sont déterminées soit (i) en divisant la longueur de la ligne de voie en temps réel par une longueur prédéfinie, soit (ii) en divisant de manière égale la longueur de la ligne de voie en temps réel en un nombre prédéfini de segments ; et

une détermination de la pluralité d'éléments d'informations routières cartographiques correspondant aux informations de positionnement routier sur la base des informations de segmentation de ligne de voie.

2. Procédé selon la revendication 1, dans lequel ladite détermination d'informations routières cartographiques cibles correspondant aux informations routières en temps réel à partir de la pluralité d'éléments d'informations routières cartographiques comprend :

une détermination d'un premier point cible cartographique à partir d'une ligne de voie cartographique correspondant aux informations routières cartographiques, et une détermination d'une position relative cartographique d'une autre position sur la ligne de voie cartographique par rapport au premier point cible cartographique, dans lequel le premier point cible cartographique peut être tout point de la ligne de voie dans les données cartographiques ;
une détermination d'un premier point cible en temps réel à partir de la ligne de voie en temps réel correspondant aux informations routières en temps réel, et une détermination d'une position relative en temps réel d'une autre position sur la ligne de voie en temps réel par rapport au premier point cible en temps réel, dans lequel le premier point cible en temps réel peut être tout point dans la ligne de voie correspondant à la ligne de voie en temps réel ; et
une détermination des informations routières cartographiques cibles correspondant aux informations routières en temps réel sur la base de la position relative cartographique et de la position relative en temps réel.

3. Procédé selon la revendication 2, dans lequel ladite exécution d'une correction de positionnement sur le véhicule sur la base des informations routières en temps réel et des informations routières cartographiques cibles comprend :

une détermination d'un second point cible en temps réel à partir des informations routières en temps réel, et une détermination d'un second point cible cartographique correspondant au second point cible en temps réel à partir des informations routières cartographiques cibles ; et
une exécution d'une correction de positionnement sur le véhicule sur la base du second point cible en temps réel et du second point cible cartographique.

4. Procédé selon la revendication 1, comprenant en outre, avant ladite acquisition d'informations routières en temps réel lorsqu'il est détecté qu'un véhicule se trouve sur une route d'un type de route cible :
une détermination, à partir des données cartographiques, du type de route de la route sur laquelle le véhicule est situé.

5. Procédé selon la revendication 1, dans lequel le type de route cible est un type de courbe.

6. Appareil de positionnement de véhicule, comprenant :

un module de post-traitement d'informations routières en temps réel, configuré pour acquérir des informations routières en temps réel lorsqu'il est détecté qu'un véhicule se trouve sur une route d'un type de route cible, dans lequel les types de route comprennent un type de route droite, un type de courbe et un type de route à embranchement ;
un module de détermination d'informations routières cartographiques, configuré pour acquérir des données cartographiques et déterminer une pluralité d'éléments d'informations routières cartographiques à partir des données cartographiques ;
un module de détermination d'informations routières cartographiques cibles, configuré pour déterminer des informations routières cartographiques cibles correspondant aux informations routières en temps réel à partir de la pluralité d'éléments d'informations routières cartographiques ; et
un module de correction, configuré pour exécuter une correction de positionnement sur le véhicule sur la base des informations routières en temps réel correspondantes et des informations routières cartographiques cibles ;
dans lequel le module de détermination d'informations routières cartographiques est en outre configuré pour :

acquérir des informations de positionnement du véhicule ;
déterminer des informations de positionnement routier correspondant aux informations de positionnement à partir des données cartographiques ; et
déterminer la pluralité d'éléments d'informations routières cartographiques sur la base des informations de positionnement routier ;

**caractérisé en ce que** ledit module de détermination d'informations routières cartographiques est configuré pour :

déterminer une longueur d'une ligne de voie en temps réel correspondant aux informations routières en temps réel ;

déterminer des informations de segmentation de ligne de voie correspondant aux informations de positionnement routier, dans lequel les informations de segmentation de ligne de voie sont déterminées soit (i) en divisant la longueur de la ligne de voie en temps réel par une longueur prédéfinie, soit (ii) en divisant de manière égale la longueur de la ligne de voie en temps réel en un nombre prédéfini de segments ; et

déterminer la pluralité d'éléments d'informations routières cartographiques correspondant aux informations de positionnement routier sur la base des informations de segmentation de ligne de voie.

7. Appareil selon la revendication 6, dans lequel le module de détermination d'informations routières cartographiques cibles est en outre configuré pour :

déterminer un premier point cible cartographique à partir d'une ligne de voie cartographique correspondant aux informations routières cartographiques, et déterminer une position relative cartographique d'une autre position sur la ligne de voie cartographique par rapport au premier point cible cartographique, dans lequel le premier point cible cartographique peut être tout point de la ligne de voie dans les données cartographiques ;

déterminer un premier point cible en temps réel à partir de la ligne de voie en temps réel correspondant aux informations routières en temps réel, et déterminer une position relative en temps réel d'une autre position sur la ligne de voie en temps réel par rapport au premier point cible en temps réel, dans lequel le premier point cible en temps réel peut être tout point dans la ligne de voie correspondant à la ligne de voie en temps réel ; et

déterminer les informations routières cartographiques cibles correspondant aux informations routières en temps réel sur la base de la position relative cartographique et de la position relative en temps réel.

8. Appareil selon la revendication 7, dans lequel le module de correction est en outre configuré pour :

déterminer un second point cible en temps réel à partir des informations routières en temps réel, et déterminer un second point cible cartographique correspondant au second point cible en temps réel à partir des informations routières cartographiques cibles ; et

exécuter une correction de positionnement sur le véhicule sur la base du second point cible en temps réel et du second point cible cartographique.

9. Appareil selon la revendication 6, comprenant en outre :

un moyen pour déterminer, à partir des données cartographiques, avant l'acquisition des informations routières en temps réel, le type de route de la route sur laquelle le véhicule est situé.

10. Véhicule, comprenant un processeur, une mémoire et un programme informatique stocké sur la mémoire et capable de s'exécuter sur le processeur, dans lequel l'exécution du programme informatique par le processeur entraîne la mise en œuvre du procédé de positionnement de véhicule selon l'une quelconque des revendications 1 à 5.

11. Support de stockage lisible par ordinateur sur lequel est stocké un programme informatique qui, lorsqu'il est exécuté par un processeur, entraîne la mise en œuvre du procédé de positionnement de véhicule selon l'une quelconque des revendications 1 à 5.

| acquiring real-time road information when it is detected that a vehicle is on a road of a target road type | 101 |
|---|---|
| acquiring map data and determining a plurality of pieces of map road information from the map data | 102 |
| determining target map road information matching the real-time road information from the plurality of pieces of map road information | 103 |
| performing positioning correction on the vehicle based on the real-time road information and the target map road information | 104 |

Fig. 1

| acquiring real-time road information when it is detected that a vehicle is on a road of a target road type | 201 |
|---|---|
| acquiring map data and acquiring vehicle positioning information | 202 |
| determining road positioning information corresponding to the positioning information from the map data | 203 |
| determining a plurality of pieces of map road information based on the road positioning information | 204 |
| determining target map road information matching the real-time road information from the plurality of pieces of map road information | 205 |
| performing positioning correction on the vehicle based on the real-time road information and the target map road information | 206 |

Fig. 2a

Range of a lane

intercepted

Vehicle

Lane line sensed in real time

Lane line in a map

Fig. 2b

y

line_i

x

Fig. 3b

y

line1

x

Fig. 3c

acquiring real-time road information when it is detected that a vehicle is on a road of a target road type — 301

acquiring map data and determining a plurality of pieces of map road information from the map data — 302

determining a first map target point from a map lane line corresponding to the map road information, and determining a map relative position of another position in the map lane line to the first map target point — 303

determining a first real-time target point from a real-time lane line corresponding to the real-time road information, and determining a real-time relative position of another position in the real-time lane line to the first real-time target point — 304

determining target map road information matching the real-time road information based on the map relative position and the real-time relative position — 305

determining a second real-time target point from the real-time road information, and determining a second map target point matching the second real-time target point from the target map road information — 306

performing positioning correction on the vehicle based on the second real-time target point and the second map target point — 307

Fig. 3a

```
┌─────────────────────────────────────────┐
│  calculating a length L of a lane line   │
│       line_1 sensed in real time         │
└─────────────────────────────────────────┘
                    │
                    ▼
┌─────────────────────────────────────────┐
│  Equally dividing an intercepted lane    │
│  line in a map and a lane line sensed in │
│  real time into segments based on        │
│        distance d on the curve.          │
└─────────────────────────────────────────┘
                    │
                    ▼
┌─────────────────────────────────────────┐
│  using a sliding window with a length    │
│   of L to slide from a starting point to │
│   an end point on the intercepted lane   │
│   line to be matched, and determining a  │
│    lane line in the window as line_i     │
└─────────────────────────────────────────┘
                    │
                    ▼
┌─────────────────────────────────────────────────┐
│  calculating a matching degree between line_i and line_1 │
│    during each sliding specifically, rotating and translating │
│  line_i and line_1 so that near endpoints of line_i and line_1 │
│    move to the origin of an x axis, and far endpoints thereof │
│   are on the x axis, calculating differences between vertical │
│  coordinates of points corresponding to each other in curves │
│  line_i and line_1, taking absolute values of the differences, │
│    summing the absolute values and then dividing the sum by │
│   the length of the curve to obtain a matching error value M │
└─────────────────────────────────────────────────┘
                    │
                    ▼
┌─────────────────────────────────────────┐
│  selecting a window with the minimum     │
│  matching error value M to obtain a lane │
│    line matching line_1 in the map       │
└─────────────────────────────────────────┘
```

Fig. 4

```
┌─────────────────────────────────────────┐
│     Real-time road information post-     │
│        processing module 501             │
└─────────────────────────────────────────┘
                    │
┌─────────────────────────────────────────┐
│   Map road information determination     │
│             module 502                   │
└─────────────────────────────────────────┘
                    │
┌─────────────────────────────────────────┐
│      Target map road information         │
│       determination module 503           │
└─────────────────────────────────────────┘
                    │
┌─────────────────────────────────────────┐
│          Correction module 504           │
└─────────────────────────────────────────┘
```

Fig. 5

**EP 3 988 968 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202010936807 A

- US 2010169013 A